# EUROPÄISCHE PATENTSCHRIFT

(11) **EP 1 000 890 B1**
(45) Veröffentlichungstag und Bekanntmachung des Hinweises auf die Patenterteilung: **02.08.2006**
(21) Anmeldenummer: 99120827.3
(22) Anmeldetag: 22.10.1999
(51) Int. Cl.: B65H 7/00, G01B 11/06, B65H 7/12, B65H 39/04

(54) **Vorrichtung zur Dickenmessung**
Device for measuring thickness
Dispositif de mesure d'épaisseur

(30) Priorität: 09.11.1998 US 188238
(43) Veröffentlichungstag der Anmeldung: 17.05.2000
(73) Patentinhaber: Goss International Americas, Inc., Dover, NH 03820 (US)
(72) Erfinder: Conner, Charles Jeffrey, Beavercreek, Ohio 45430 (US); Farr, Alan Scott, Huber Heights, Ohio 45424 (US); Schlough, James Richard, Troy, Ohio 45373 (US)
(74) Vertreter: Domenego, Bertrand

(56) Entgegenhaltungen:
- EP-A- 0 691 297
- US-A- 5 213 318
- PATENT ABSTRACTS OF JAPAN vol. 011, no. 296 (M-627), 25. September 1987 (1987-09-25) -& JP 62 088746 A (CANON INC), 23. April 1987 (1987-04-23)
- PATENT ABSTRACTS OF JAPAN vol. 1997, no. 05, 30. Mai 1997 (1997-05-30) & JP 09 020439 A (CANON INC), 21. Januar 1997 (1997-01-21)
- PATENT ABSTRACTS OF JAPAN vol. 017, no. 269 (P-1544), 25. Mai 1993 (1993-05-25) & JP 05 010728 A (STAR MICRONICS CO LTD), 19. Januar 1993 (1993-01-19)
- PATENT ABSTRACTS OF JAPAN vol. 1995, no. 11, 26. Dezember 1995 (1995-12-26) -& JP 07 228389 A (RICOH CO LTD), 29. August 1995 (1995-08-29)
- PATENT ABSTRACTS OF JAPAN vol. 1998, no. 09, 31. Juli 1998 (1998-07-31) & JP 10 087114 A (SAMSUNG ELECTRON CO LTD), 7. April 1998 (1998-04-07)
- PATENT ABSTRACTS OF JAPAN vol. 018, no. 404 (M-1646), 28. Juli 1994 (1994-07-28) -& JP 06 115764 A (FUJITSU LTD), 26. April 1994 (1994-04-26)

## Beschreibung

Die vorliegende Erfindung betrifft eine Vorrichtung zu in Zusammentragen flacher Produkte wie Bogen oder Signaturen nach dem Oberbegriff des Anspruches 1.

In der Buch-, Broschüren-, Zeitschriftenproduktion und ähnlichen Bereichen werden Zusammentragsysteme eingesetzt, die in der Regel eine Transportvorrichtung umfassen, auf der einzelne Signaturen zur nachfolgenden Bearbeitung, z. B. zum Binden, zu einem Buchblock zusammengetragen werden. Entlang der Transportvorrichtung sind in der Regel mehrere Zuführstationen mit jeweils einer Zuführeinrichtung angeordnet, welche jeweils eine einzelne Signatur von einem Signaturenstapel der Transportvorrichtung zuführt, so daß auf der Transportvorrichtung nach und nach ein Buchblock gebildet wird. Die Zuführeinrichtungen umfassen in dei Regel Dickenmesser zum Erfassen von Fehlfunktionen der Zuführeinrichtung, wenn z. B. mehr oder weniger Bogen als vorgesehen von dem Stapel abgenommen werden.

Zur Lösung dieses Problems wurden verschiedene Versuche unternommen, Zusammentragsysteme mit Vorrichtungen zum Messen der Dicke einer von einem Signaturenstapel einer Transportvorrichtung zugeführten Signatur auszustatten. Derartige Dickenmesser umfassen in der Regel ein mechanisches Meßinstrument mit einer Skala zum Messen der Dicke der von der Zuführeinrichtung an die Transportvorrichtung übergebenen Bogen. Ein derartiger Dickenmesser ist z. B. aus US 4,471,954 bekannt. In dieser Schrift ist z. B. eine Transportvorrichtung in Form eines Taschenförderbands mit einer Vielzahl von Bogeneinlegefächern beschrieben. Den Bogeneinlegefächern ist jeweils eine Bogenauswurfvorrichtung zugeordnet, welche einzelne Bogen aus dem jeweiligen Bogeneinlegefach einer gemeinsamen Transportbahn zuführt. Zwischen jedem der Bogeneinlegefächer und der Transportbahn wird eine Bogendurchlautkontrolle durchgeführt, indem ein photoelektrischer Detektor ein Lichtdurchlässigkeits- oder Lichtreflexionssignal erzeugt, welches mit einem einem einzelnen Bogen entsprechenden gespeicherten Durchschnittswert verglichen wird.

Eine weitere Vorrichtung zum Messen der Dicke von Bogen ist aus der EP-A-0691297 bekannt .

Eine weitere Vorrichtung zum Messen der Dicke von Bogen, welche von einer Zuführstation einem Taschenförderband zugeführt werden, ist aus US-A-5,213,318 bekannt Die in dieser Schrift beschriebene Vorrichtung entspricht dem Oberbegriff des Anspruches 1 und umfaßt eine Vielzahl von Zuführstationen, an denen die Fördertaschen vorbeibewegt werden können. Den Fördertaschen sind jeweils eine ortsfeste erste Walze und eine bewegbare zweite Walze zugeordnet, die einander kontaktieren, wenn zwischen ihnen kein Bogen hindurchläuft. Bewegt sich ein flaches Produkt zwischen den Walzen hindurch, so wird die zweite Walze ausgelenkt, wobei der Betrag des Auslenkungswegs zur Dicke des hindurchbewegten Produkts proportional ist. Zur Feststellung der Dicke des Produkts wird die Länge des Auslenkungswegs der zweiten Walze gemessen. Dazu ist die zweite Walze auf einer bewegbaren Welle angeordnet, an deren einem Ende in einem Zwischenraum zwischen einer Lichtquelle und einem Lichtsensor ein Blech drehbar angeordnet ist. Bei Drehung der Welle ändert sich die Winkelposition des Blechs, so daß das Blech mehr oder weniger von der Lichtquelle ausgestrahltes Licht abfängt. Die abgefangene Lichtmenge entspricht demnach der Auslenkung der Walze.

Dieses Verfahren ist jedoch aufgrund von Schatteneffekten und der begrenzten Auflösung des Lichtsensors nur bedingt exakt. Ferner muß jeder Transporttasche eine eigene Lichtquelle zugeordnet werden.

Es ist eine Aufgabe der vorliegenden Erfindung, die Genauigkeit der Dickenmessung zu erhöhen und eine verbesserte Vorrichtung zur Dickenmessung von flachen Produkten zu schaffen.

Diese Aufgabe wird durch eine Vorrichtung gemäß den Merkmalen des Anspruchs 1 gelöst.

Gemäß der vorliegenden Erfindung wird eine Vorrichtung zum Zusammentragen von flachen Produkten wie Bogen oder Signaturen vorgeschlagen, in der die flachen Produkte mittels einer Zuführeinrichtung von einem Signaturenstapel einer Aufnahmeeinrichtung zugeführt werden. Die Zuführeinrichtung umfaßt eine erste Walze und eine auslenkbare zweite Walze, die einander kontaktieren und einen Walzenspalt bilden, durch den ein flaches Produkt hindurchgeführt werden kann, wobei die erste Walze ausgelenkt wird, wenn ein flaches Produkt den Walzenspalt passiert. Die Vorrichtung umfaßt ferner ein an der ersten Walze angeordnetes erstes Reflektorelement, welches auftreffendes Licht reflektiert, und eine Lichtquelle, welche einen auf das erste Reflektorelement gerichteten Lichtstrahl ausstrahlt. Weiterhin umfaßt die erfindungsgemäße Vorrichtung ein erstes Sensorelement, welches das von dem Reflektorelement reflektierte Licht erfaßt und ein Sensorsignal erzeugt. Eine Rechnereinheit berechnet auf der Basis des Sensorsignals die Dicke des flachen Produkts.

Die erfindungsgemäße Lösung sind vorteilhaft, da die Vorrichtung gemäß der vorliegenden Erfindung bei der Messung der Dicke flacher Produkte eine hohe Genauigkeit gewährleistet. Ferner wird durch die vorliegende Erfindung eine Meßgröße zum Messen der Dicke des flachen Produkts verwendet, die auch bei geringer Auslenkung der Walze eine hohe Genauigkeit gewährleistet, ohne daß dazu mechanische Teile eingesetzt werden müssen, welche unerwünschte Vibrationen und Masseträgheit zur Folge haben können.

Gemäß weiterer Details der vorliegenden Erfindung können die erste und die zweite Walze und das erste Reflektorelement sowie das erste Sensorelement an einer bewegbaren Transportvorrichulng mit bewegbaren Aufnahmeeinrichtungen, sogenannten Sammlern mit einer Aufnahmetasche und einer Zuführeinrichtung, angeordnet sein. Die Lichtquelle und eine Rechnereinheit können ortsfest und von der bewegbaren Transportvorrichtung beabstandet angeordnet sein. Diese räumliche Trennung der Bauteile hat den zusätzlichen Vorteil, daß nur eine Lichtquelle benötigt wird, da die Sammler jeweils an der Lichtquelle vorbeibewegt werden.

Gemäß einem weiteren Detail der vorliegenden Erfindung kann an der bewegbaren Transportvorrichtung, z. B. an der bewegbaren Tasche, ein zweites Reflektorelement angeordnet sein. Die erste und die zweite Walze sowie das erste und das zweite Reflektorelement sind an der bewegbaren Transportvorrichtung angeordnet. Ein zusätzliches zweites Sensorelement kann vorgesehen sein, wobei sowohl das erste als auch das zweite Sensorelement ortsfest und so von der Transportvorrichtung beabstandet angeordnet sein können, daß sie das von den ersten und zweiten Reflektorelementen reflektierte Licht erfassen können. Sobald das von dem ersten Reflektorelement reflektierte Licht auf das erste Sensorelement auftrifft, beginnt ein Mikrocomputer, die von einer Pulserzeugungseinrichtung erzeugten Impulse zu zählen. Der Zählvorgang wird beendet, sobald das von dem zweiten Reflektorelement reflektierte Licht auf das Sensorelement auftrifft. Da die Anzahl der gezählten Impulse der Dicke des flachen Produkts entspricht, kann die Dicke aus der Anzahl der gezählten Impulse berechnet werden.

Ein weiterer Vorteil der vorliegenden Erfindung besteht darin, daß die Vorrichtung zur Dickenmessung in einer Zusammentrageinrichtung eingesetzt werden kann, welche eine Vielzahl von Zuführstationen, welche jeweils einen Stapel flache Produkte aufnehmen können, eine Vielzahl von Aufnahmevorrichtungen mit jeweils einer Aufnahmestelle und mit jeweils einer Zuführeinrichtung zum Zuführen von Bogenmaterial von einem Stapel in der Zuführstation zu den Aufnahmestellen umfaßt. Die Zusammentrageinrichtung umfaßt ferner Antriebseinrichtungen, welche die Aufnahmevorrichtungen nacheinander an den Zuführstationen vorbeibewegen, und weist eine Vielzahl von ersten Reflektorelementen auf, welche von einer Lichtquelle ausgestrahltes Licht reflektieren, wobei jeweils ein erstes Reflektorelement an jeder der Zuführvorrichtungen angeordnet ist. An jeder Aufnahmeeinrichtung der Vielzahl von Aufnahmeeinrichtungen ist jeweils ein Sensorelement einer Vielzahl von Sensorelementen zum Erfassen des von dem entsprechenden Reflektorelement reflektierten Lichts angeordnet. Eine Lichtquelle zur Erzeugung eines auf die ersten Reflektorelemente gerichteten Lichtstrahls ist in einem Abstand zu den Aufnahmeeinrichtungen angeordnet.

Ein weiterer Vorteil der vorliegenden Erfindung besteht darin, daß die Vorrichtung zur Dickenmessung eine Vielzahl von Zuführstationen aufweist, welche jeweils einen Stapel Bogenmaterial aufnehmen können, und ferner eine Vielzahl von Aufnahmevorrichtungen mit einer Aufnahmestelle und eine Zuführeinrichtung zum Zuführen von Bogenmaterial von einem Stapel in der Zuführstation zu den Aufnahmestellen umfaßt. Die Vorrichtung umfaßt ferner Antriebseinrichtungen, welche die Aumahmevorrichtungen nacheinander an den Zuführstationen vorbeibewegen, und eine Vielzahl von ersten Reflektorelementen, welche den von einer Lichtquelle ausgehenden Lichtstrahl reflektieren. An jeder der Zuführeinrichtungen ist ein erstes Reflektorelement angeordnet. Die Vorrichtung umfaßt eine Vielzahl von zweiten Reflektorelementen, welche von einer Lichtquelle ausgehendes Licht reflektieren, wobei an jeder Aufnahmeeinrichtung ein zweites Reflektorelement angeordnet ist. In einem Abstand zu den Aufnahmeeinrichtungen ist eine ortsfeste Lichtquelle angeordnet, welche einen auf die ersten und zweiten Reflektorelemente gerichteten Lichtstrahl erzeugt. Ein erstes Sensorelement zum Erfassen des von einem der Vielzahl von ersten Reflektorelemente reflektierten Lichts und ein zweites Sensorelement zum Erfassen des von einem der Vielzahl von zweiten Reflektorelemente reflektierten Lichts sind in einem Abstand zu den Aufnahmeeinrichtungen ortsfest angeordnet. Ebenfalls ortsfest und in einem Abstand zu den Aufnahmeeinrichtungen sind eine Vorrichtung zur Erzeugung von Impulsen und ein Mikroprozessor zur Erfassung der von der Pulserzeugungseinrichtung erzeugten Impulse und des ersten und zweiten Sensorsignals angeordnet.

Diese und weitere Merkmale der vorliegenden Erfindung sind Gegenstand der nachfolgenden Figuren sowie deren Beschreibungen.

Es zeigen im einzelnen:
- Fig. 1: eine schematische Aufsicht auf eine beispielhafte Zusammentrageinrichtung gemäß der vorliegenden Erfindung;
- Fig. 2: eine schematische Teilansicht einer beispielhaften Vorrichtung zur Dickenmessung gemäß der vorliegenden Erfindung, wenn keine Bogenzufuhr stattfindet;
- Fig. 3: eine schematische Teilansicht einer beispielhaften Vorrichtung zur Dickenmessung gemäß der vorliegenden Erfindung währrendeines normalen Zuführvorgangs;
- Fig. 4: eine schematische Teilansicht einer beispielhaften Vorrichtung zur Dickenmessung gemäß der vorliegenden Erfindung bei einer Fehlfunktion des Zuführmechanismus,
- Fig. 5: eine schematische Seitenansicht einer weiteren beispielhaften Ausführungsform einer Vorrichtung zur Dickenmessung gemäß der vorliegenden Erfindung;
- Fig. 6: eine schematische Seitenansicht einer weiteren beispielhaften Ausführungsform einer Vorrichtung zur Dickenmessung gemäß der vorliegenden Erfindung während eines korrekten Zuführvorgangs;
- Fig. 7: eine schematische Seitenansicht einer weiteren Ausführungsform einer Vorrichtung zur Dickenmessung gemäß der vorliegenden Erfindung während einer Doppelzufuhr;
- Fig. 8: eine schematische Seitenansicht eines Abschnitts einer beispielhaften Zusammentrageinrichtung gemäß der vorliegenden Erfindung.

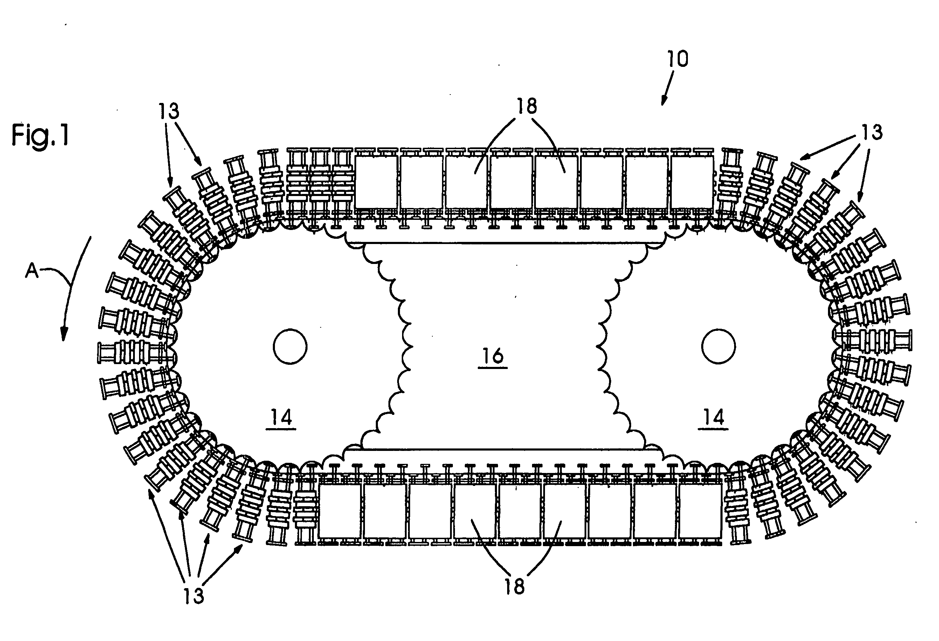

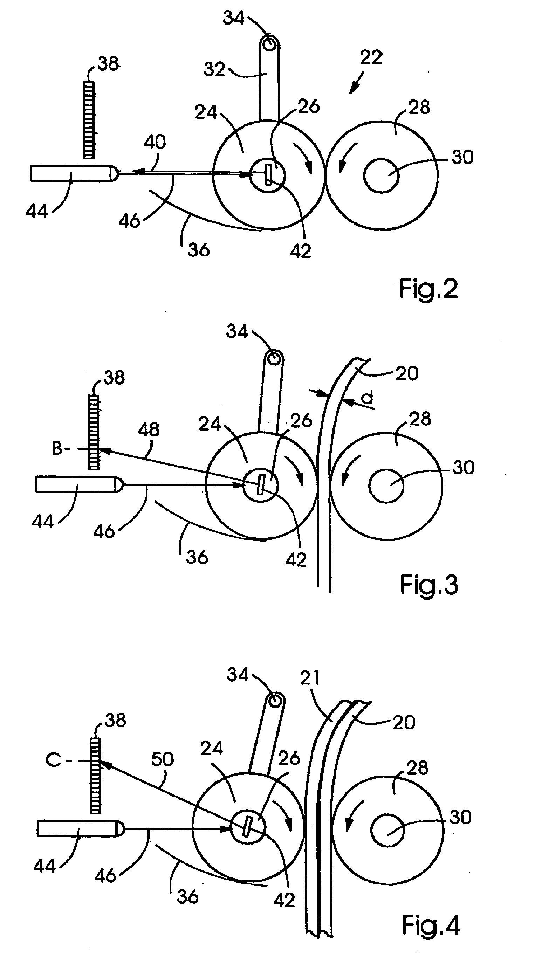

Die in Fig. 1 gezeigte Zusammentrageinrichtung 10 umfaßt eine Vielzahl von Aufnahmeeinrichtungen 13, sogenannten Sammlern, die sich in die durch den Pfeil A angezeigte Richtung entlang einer Förderbahn bewegen. Jede der Aufnahmeeinrichtungen 13 umfaßt eine Aufnahmestelle, z. B. eine Tasche, zur Aufnahme flacher Produkte und eine Zuführvorrichtung, so daß eine Vielzahl von flachen Produkten in einer vorgegebenen Reihenfolge in den Taschen zusammengetragen wird. Die Vielzahl von Aufnahmeeinrichtungen 13 ist in einem endlosen Kreislauf angeordnet und bewegt sich um an einem Hauptgestell 16 befestigte Kettenräder 14. Stapel flacher Produkte befinden sich in den Zuführstationen 18, an denen jeweils ein flaches Produkt des Stapels den Taschen zugeführt wird. Die Zuführstationen 18 können an verschiedenen Stellen entlang des Transportwegs angeordnet sein. Bevorzugt sind mindestens so viele Zuführstationen vorgesehen, wie unterschiedliche Signaturen den Taschen zugeführt werden sollen, es können jedoch auch mehr oder weniger sein. An jeder Zuführstation 18 wird ein einzelnes flaches Produkt, z. B. ein Bogen oder eine Signatur 20 (s. Fig. 3) von dem jeweiligen Stapel flacher Produkte der Aufnahmeeinrichtung 13 zugeführt, die gerade unter der betreffenden Zuführstation 18 hindurchläuft. Eine Fehlfunktion der Zuführeinrichtung tritt z. B. dann auf, wenn entweder keine Signatur (Fehlzufuhr) oder eine falsche Anzahl Signaturen (Doppelzufuhr) der Tasche zugeführt wird.

Beim Auftreten einer Fehl- oder Doppelzufuhr kann das System, welches den Zusammentragvorgang steuert, ein Signal an die nachgeordneten Zuführstationen 18 geben, um eine Zufuhr weiterer Signaturen an die betreffende Aufnahmeeinrichtung zu verhindern. Der in dieser Aufnahmeeinrichtung befindliche unvollständige Buchblock wird daraufhin am Ende des Zusammentragvorgangs ausgeschleust. Beim selektiven Zusammentragen, d. h. wenn alle vorhandenen Zuführstationen eingesetzt werden und ein Buchblock durch wahlweises Zuführen von der jeweiligen Zuführstation gebildet wird, wird der betreffende Buchblock entweder neu zusammengetragen oder ein Ersatzbuchblock wird an dessen Stelle in den Produktstrom eingefügt.

Fig. 2 zeigt eine schematische Seitenansicht einer erfindungsgemäßen Zuführvorrichtung 22 zum Zuführen flacher Produkte 20 (s. Fig. 3) von einem Stapel flacher Produkte an eine Aufnahmetasche. Die Zuführvorrichtung 22 umfaßt eine erste Walze 24 mit einer ersten Achse 26 und eine zweite Walze 28 mit einer zweiten Achse 30. Die erste Walze 24 ist an einen Hebelarm 32 gekoppelt, welcher drehbar auf einer Achse 34 gelagert ist. Die erste Walze 24 ist demgemäß um die Achse 34 drehbar und entlang einer Bewegungsbahn 36 bewegbar. An der Walze 24, z. B. an deren Achse 26, ist ein erstes Reflektorelement 42, z. B. ein Spiegel, ein Metall, eine mit Metall beschichtete Fläche oder eine beliebige sonstige reflektierende Fläche, angeordnet. Das erste Reflektorelement reflektiert das von einer Lichtquelle 44, z. B. einem Laser, ausgestrahlte sichtbare oder unsichtbare, auf das erste Reflektorelement 42 gerichtete Licht. Erfolgt kein Zuführvorgang, so sind die Walzen 24 und 28 nah beieinander angeordnet und können aneinander angestellt sein. In diesem Zustand ist die Walze 24 nicht ausgelenkt. Der von der Lichtquelle 44 auf daserste Reflektorelement 42 gerichtete Lichtstrahl 46 wird also in einer durch den reflektierten Lichtstrahl 40 angezeigte Richtung reflektiert, die von der Winkelposition desersten Reflektorelements 42 bezüglich der Walze 24 abhängig ist. In dem in Fig. 2 gezeigten Beispiel wird der reflektierte Lichtstrahl 40 in die entgegengesetzte Richtung wieder auf die Lichtquelle 44 zu reflektiert, so daß er nicht auf ein in einem Abstand zu der Zuführeinrichtung 22 angeordnetes erstes Sensorelement 38 auftrifft.

Während eines Zuführvorgangs wird ein flaches Produkt 20 von einem Stapel einer Aufnahmetasche Zugeführt und läuft in den Spalt zwischen den Walzen 24 und 28 ein, wie in Fig. 3 schematisch gezeigt ist. In Abhängigkeit von der Dicke d des flachen Produkts 20 wird die bewegbare Walze 24 um die Achse 34 geschwenkt und um einen der Dicke des flachen Produkts 20 entsprechenden Weg ausgelenkt. Das an der ersten Achse 26 fest angeordnete Reflektorelement 42 wird demgemäß gedreht und reflektiert das von der Lichtquelle ausgehende auftreffende Licht 46 in die durch den reflektierten Strahl 48 angezeigte Richtung. Im ausgelenkten Zustand trifft somit der reflektierte Lichtstrahl 48 auf das erste Sensorelement 38, welches so ausgebildet ist, daß es das Licht und insbesondere die Wellenlänge des von der Lichtquelle 44 ausgestrahlten Lichts erfassen kann. Der reflektierte Lichtstrahl trifft auf das Sensorelement in einem Punkt B, wobei die Lage des Punkts B auf dem Sensorelement zu der Dicke d des flachen Produkts proportional ist.

Bei einer Doppelzufuhr werden z. B. zwei flache Produkte 20, 21 von dem Stapel den Aufnahmetaschen zugeführt, wie dies schematisch in Fig. 4 gezeigt ist. In diesem Fall laufen beide flachen Produkte 20, 21 in den Spalt zwischen den Walzen 24 und 28 ein. Die drehbare Walze 24 wird um die Achse 34 gedreht und entlang der Bewegungsbahn 36 um einen bestimmten, der Summe der Dicken der ersten Signatur 20 und der zweiten Signatur 21 entsprechenden Betrag ausgelenkt. Die Summe der beiden Dicken entspricht im Wesentlichen der doppelten Dicke d eines flachen Produkts. Demgemäß legt das Reflektorelement 42 einen größeren Weg zurück als bei einer normalen Zufuhr, und der von der Lichtquelle 44 auf das erste Reflektorelement 42 gerichtete Lichtstrahl 46 wird in die durch den reflektierten Lichtstrahl 50 angezeigte Richtung reflektiert, die sich von der Richtung des reflektierten Lichtstrahls 48 aus Fig. 3 unterscheidet. Im stärker ausgelenkten Zustand trifft der reflektierte Lichtstrahl 50 auf das erste Sensorelement 38 in einem Punkt C, dessen Lage auf dem Sensorelement zu dem Wert der Dicke zweier flacher Produkte proportional ist.

Es ist folglich möglich, die Dicke des flachen Produkts oder der flachen Produkte durch eine Auswertung der Punkte B bzw. C zu bestimmen, an dem der von dem ersten Reflektorelement 42 reflektierte Lichtstrahl 48, 50 auf das erste Sensorelement 38 trifft. Ein Durchschnittswert für die Dicke der flachen Produkte kann bestimmt werden, indem eine bestimmte Anzahl von flachen Produkten von dem Stapel den Taschen zugeführt wird und die entsprechenden Auftreffpunkte B, C des reflektierten Strahls auf das Sensorelement zu einem Durchschnittswert oder einem gültigen Toleranzbereich zusammengefaßt werden.

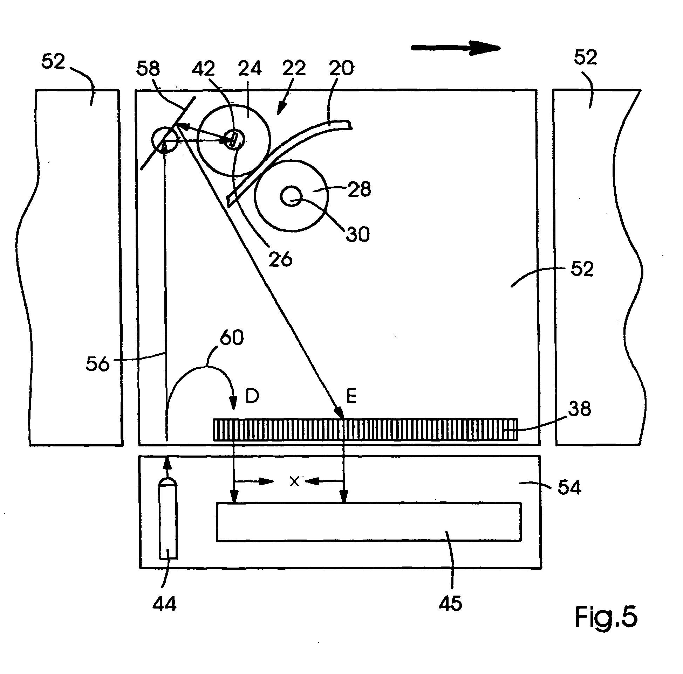

In Fig. 5 ist eine weitere Ausführungsform einer Zuführvorrichtung gemäß der vorliegenden Erfindung gezeigt. Die Zuführvorrichtung umfaßt eine Vielzahl von ersten Elementen 52 und ein einzelnes zweites Element 54, wobei die ersten Elemente 52 bezüglich des zweiten Elements 54 beispielsweise in Pfeilrichtung bewegbar sind. Die ersten Elemente 52 sind auf der Transportvorrichtung angeordnet, z. B. jeweils an den Aufnahmeeinrichtungen der Transportvorrichtung 10, und umfassen jeweils eine Zuführeinrichtung 22, ein auf einer bewegbaren ersten Walze 24 angeordnetes erstes Reflektorelement 42 und ein erstes Sensorelement 38. Das zweite Element 54 ist ortsfest und von den ersten Elementen 52 beabstandet angeordnet und umfaßt eine Lichtquelle 44 und eine Auswertungseinheit 45 zum Auswerten der von dem ersten Sensorelement 38 erzeugten Sensorsignale. Die Auswertungseinheit 45 kann einen insbesondere zur Berechnung der Dicke der flachen Produkte geeigneten Mikrocomputer umfassen. Die Zuführeinrichtung 22 umfaßt die erste Walze 24 mit deren Achse 26 und eine zweite Walze 28 mit einer zweiten Achse 30. Die erste Walze 24 ist auslenkbar und wird beim Einlaufen eines flachen Produkts in den Spalt zwischen der ersten Walze 24 und der zweiten Walze 28 ausgelenkt. Das erste Reflektorelement 42 ist ortsfest in einer bestimmten Winkelposition bezüglich der ersten Walze 24 angeordnet und kann z. B. auf einer durch die erste Walze 24 verlaufenden Achse 26 angebracht sein. Das erste Element 52 kann ferner einen Lichtausrichtungsvorrichtung, z. B. aus einem ersten Lichtfaserkabel 56 und einem Spiegel 58, umfassen, wekhe einen Lichtstrahl von der ortsfesten Lichtquelle 44 auf das erste Reflektorelement lenkt. Wird das von der Lichtquelle 44 ausgestrahlte Licht über das erste Lichtfaserkabel 56 direkt zu dem ersten Reflektorelement 42 gelenkt, so kann der Spiegel 58, welcher das ausgestrahlte Licht von der Lichtquelle auf das erste Reflektorelement 42 lenkt, entfallen. In dem ersten Element 52 kann ferner ein zweites Lichtfaserkabel 60 angeordnet sein, welches das Licht von der Lichtquelle 44 zu einer bestimmten Position D auf dem ersten Sensorelement 38 lenkt.

Passiert eines der ersten Elemente 52 der Vorrichtung zur Dickenmessung das zweite Element 54, so wird von der Lichtquelle 44 ein Lichtstrahl auf das vorbeilaufende Ende des ersten und zweiten Lichtfaserkabels 56, 60 gerichtet. Das Licht läuft durch die Kabel 56 und 60 und wird über das Kabel 56 auf das Reflektorelement 42 und über das Kabel 60 auf das Sensorelement 38 gelenkt, auf das es in einem mit D bezeichneten Punkt auftrifft. Der Auftreffpunkt D erzeugt ein entsprechendes Bezugssignal, welches der an dem zweiten Element 54 angeordneten Auswertungseinheit 45 übermittelt wird. Beim Einlaufen eines flachen Produkts in den Walzenspalt zwischen den beiden Walzen 24, 28 wird die erste Walze 24 ausgelenkt. Diese Auslenkung führt zu einer Veränderung der Winkelposition des ersten Reflektorelements 42, so daß das von diesem reflektierte Licht auf den Spiegel 58 und von dort auf das erste Sensorelement 38 gelenkt wird, auf das es in einem mit E bezeichneten Punkt auftrifft. Das Sensorelement 38 kann z. B. als ein Photodetektorfeld ausgebildet sein, welches die Wellenlänge der Lichtquelle 44 ermitteln kann. Der Auftreffpunkt E auf dem Sensorelement 38 erzeugt ein Auslenkungssignal, welches dann an die auf dem zweiten Element 54 angeordnete Auswertungseinheit 45 übermittelt wird.

Da das Licht bei geeigneter Anbringung des Sensorelements 38 ebenso direkt auf dasselbe ausgerichtet werden kann, kann der Einsatz des Spiegels 58 entfallen. Da der Unterschied zwischen dem Auftreffpunkt D, in dem der Bezugslichtstrahl auf das Sensorelement auftrifft, und dem Auftreffpunkt E, in dem der ausgelenkte Lichtstrahl auf das Sensorelement auftrifft, zur Dicke eines flachen Produkts proportional ist, kann die Dicke ermittelt werden, wenn beide Signale an die Auswertungseinheit 45 übermittelt werden. Es ist ebenso denkbar, statt der Positionen beider Auftreffpunkte D und E einen dem Unterschied zwischen beiden Auftreffpunkten entsprechenden Wert von dem ersten Element 52 an das zweite Element 54 zu übermitteln.

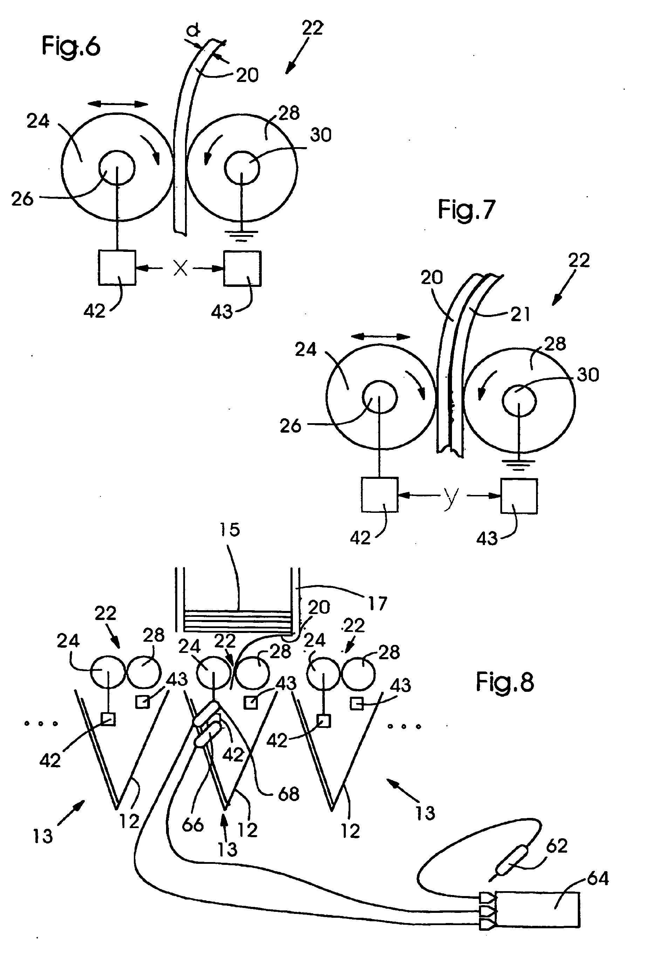

In einer weiteren Ausführungsform der Erfindung umfaßt die Vorrichtung ein erstes Reflektorelement 42 und ein zweites Reflektorelement 43, wie in Fig. 6 und 7 gezeigt ist. Das erste Reflektorelement 42 ist an die bewegbare Walze 24 gekoppelt und kann z. B. an der ersten Achse 26 der ersten Walze angeordnet oder mit dieser verbunden sein. Die bewegbare Walze 24 wird, wie durch den Pfeil angedeutet ist, beim Einlaufen eines flachen Produkts 20 in den Spalt zwischen der bewegbaren ersten Walze 24 und der ortsfesten zweiten Walze 28 geradlinig ausgelenkt, wobei der Auslenkungsweg von der Dicke des einlaufenden flachen Produkts 20 abhängig ist. Das zweite Reflektorelement 43 ist in einer vorgegebenen Position, z. B. an der Tasche 12 oder an der ortsfesten Walze 28, an der Aufnahmeeinrichtung 13 angeordnet. Die Dicke d des oder der zwischen den Walzen 24 und 28 einlaufenden Produkte entspricht der Entfernung x zwischen dem ersten und dem zweiten Reflektorelement 42, 43 und läßt sich berechnen aus der Differenz zwischen dem Abstand der zwei Reflektorelemente 42, 43 in einem unausgelenkten Zustand und dem Abstand der beiden Reflektorelemente 42, 43 in ausgelenktem Zustand, wenn sich mindestens ein flaches Produkt 20 zwischen der ersten und der zweiten Walze 24, 28 befindet.

Das zweite Reflektorelement 43 kann ortsfest in einer geeigneten Position an der Aufnahmeeinrichtung 13 oder an einem ortsfesten Teil der zweiten Walze 28, insbesondere an der zweiten Achse 30 angeordnet sein.

Zur Berechnung der Dicke d der durch den Walzenspalt laufenden flachen Produkte und zur Feststellung einer Doppel- oder Fehlzufuhr muß der Abstand x oder y (s. Fig. 7) erfaßt und mit einem zuvor gespeicherten Abstandswert verglichen werden, welcher der Dicke eines korrekt zugeführten flachen Produkts entspricht. Dieser zuvor gemessene Wert kann vor Inbetriebnahme der Maschine in einem sogenannten Lernmodus gemessen werden, in dem gültige Dickewerte oder ein gültiger Toleranzbereich für ein flaches Produkt ermittelt und gespeichert werden.

In Fig. 8 ist eine detailliertere Meßanordnung gezeigt, in der zur exakten Messung der Vorrichtungsbewegungen eine Pulserzeugungseinzichtung 62 an der Vorrichtung angeordnet ist. Die Anordnung umfaßt eine Vielzahl von Aufnahmeeinrichtungen 13, die jeweils eine als Aufnahmestelle dienende Tasche 12 umfassen, welcher mittels einer jeweils zugeordneten Zuführvorrichtung 22 flache Produkte von einem Stapel 15 zugeführt werden. Die Zuführeinrichtungen 22 umfassen jeweils eine bewegbare erste Walze 24, eine ortsfeste Walze 28, ein mit der ersten Walze 24 bewegbares erstes Reflektorelement 42 und ein zweites Reflektorelement 43, welches beim Einlaufen eines flachen Produkts nicht bewegbar ist. Die Aufnahmeeinrichtungen 13 sind hintereinander angeordnet und bewegen sich entlang einer in Fig. 1 gezeigten vorgegebenen Bewegungsbahn an jeder der Vielzahl von Zuführstationen 17 vorbei. Beim Einlaufen eines flachen Produkts 20 in den Spalt zwischen der bewegbaren Walze 24 und der ortsfesten Walze 28 wird die bewegbare Walze 24 zusammen mit dem Reflektorelement 42 ausgelenkt. Ein Mikroprozessor 64, z. B. ein Computer, überwacht das erste und zweite Reflektorelement 42, 43 über ein geeignetes erstes und zweites Überwachungselement 66, 68. Beide Überwachungselemente können ein Sensorelement zum Erfassen des von den Reflektorelementen 42, 43 reflektierten Lichts umfassen, wobei ein auf die Reflektorelemente gerichteter Lichtstrahl von einer (nicht gezeigten) separaten Lichtquelle oder von den Überwachungselementen 66, 68 selbst erzeugt werden kann. Dies kann z. B. dadurch erreicht werden, daß eine Laserdiode oder eine sonstige Lichtausstrahlungsdiode (LED) in die Lichterfassungselemente 66, 68 eingebaut wird. Sobald der Mikroprozessor 64 ein Signal empfängt, das anzeigt, daß ein erstes Reflektorelement 42 das erste Überwachungselement 66 passiert, beginnt er, die von einer Pulserzeugungseinrichtung 62 erzeugten Impulse zu zählen, die beispielsweise dem von der Aufnahmevorrichtung 13 zurückgelegten Weg entsprechen können. Auf ein zweites Signal des zweiten Überwachungselements, welches anzeigt, daß das zweite Reflektorelement 43 das zweite Überwachungselement passiert, wird der Zählvorgang abgebrochen. Die Anzahl der gezählten Impulse ist mit dem Abstand zwischen dem ersten und zweiten Reflektorelement 42, 43 korreliert und somit mit der Dicke des oder der zwischen der ersten und zweiten Walze 24, 28 hindurch gelaufenen flachen Produkte. Durch Vergleich mit einer vorgegebenen Impulszahl oder einem vorgegebenen Toleranzbereich von Impulszahlen wird ermittelt, ob eine Fehl- oder Doppelzufuhr erfolgt ist. Die vorgegebene Impulszahl bzw. der Toleranzbereich können zuvor in einer Tabelle für jede Aufnahmeeinrichtung gespeichert werden.

Ist die gemessene Impulszahl z. B. doppelt so groß wie erwartet, so wird eine Doppelzufuhr festgestellt und einem Maschinenbediener angezeigt oder den nachgeordneten Zuführstationen wie zuvor beschrieben mitgeteilt. Durch Erhöhung der pro Maschinenzyklus von der Pulserzeugungseinrichtung erzeugten Impulse kann die Genauigkeit der Messung erhöht werden.

Der Mikroprozessor kann programmiert werden, indem für jede Aufnahmeeinrichtung die Anzahl der Impulse sowohl ohne durchlaufendes flaches Produkt als auch die normale Produktdicke für den betreffenden Produktionslauf in einer Tabelle oder einem sonstigen Software-Vorgang gespeichert wird. Dadurch, daß für jede Aufnahmeeinrichtung Daten gespeichert werden, können auch die herstellungsbedingt unterschiedlichen Toleranzbereiche berücksichtigt werden.

### Liste der Bezugszeichen

- 10: Zusammentrageinrichtung
- 12: Tasche
- 13: Aufnahmeeinrichtung
- 14: Kettenräder
- 15: Stapel
- 16: Hauptrahmen
- 17: Zuführstation
- 18: Zuführstation
- 20: flaches Produkt
- 21: flaches Produkt
- 22: Zuführeinrichtung
- 24: Walze
- 26: Achse
- 28: Walze
- 30: Achse
- 32: Hebelarm
- 34: Achse
- 36: Bewegungsbahn
- 38: erstes Sensorelement
- 40: reflektierter Lichtstrahl
- 42: Reflektorelement
- 43: Reflektorelement
- 44: Lichtquelle
- 45: Auswertungsvorrichtung
- 46: Lichtstrahl
- 48: reflektierter Lichtstrahl
- 50: reflektierter Lichtstrahl
- 52: erstes Element
- 54: zweites Element

- 56: Lichtfaserkabel
- 58: Spiegel
- 60: Lichtfaserkabel
- 62: Pulserzeugungseinrichtung
- 64: Mikroprozessor
- 66: erstes Überwachungselement
- 68: zweites Überwachungselement
- B: Auftreffpunkt
- C: Auftreffpunkt
- E: Auftreffpunkt

## Patentansprüche

1. Vorrichtung zum Zusammentragen flacher Produkte (20; 21) wie Bogen oder Signaturen mit einer Vielzahl von bewegbaren Aufnahmeeinrichtungen (13), die jeweils eine Zuführeinrichtung (22) umfassen, welche mittels eines zur Messung der Dicke der Produkte (20; 21) benutzten Walzenpaares aus einer ersten und einer zweiten Walze (24, 28) gebildet ist und einen Walzenspalt bildet, durch den die Produkte (20; 21) führbar sind
wobei die erste Walze (24) auf einer durch die den Walzenspalt passierenden Produkte auslenkbaren ersten Achse (26) gelagert ist und mit
einer eine ortsfest angeordnete Lichtquelle (44), ein erstes Sensorelement (38; 66) und eine von diesem aus eingestrahlten Licht erzeugte, erste Sensorsignale verarbeitende Auswertungseinheit (45; 64) umfassenden Messeinrichtung für die Dicke der flachen Produkte (20; 21)
**dadurch gekennzeichnet, dass**
die Messeinrichtung ein an der ersten Achse (26) fixiertes erstes Reflektorelement (42) aufweist, welches von der Lichtquelle (44) abgestrahltes Licht reflektiert und auf das erste Sensorelement (38; 66) ausrichtet,
und **dadurch** dass das erste Reflektorelement (42) eine flache Reflektorfläche aufweist .

2. Vorrichtung nach Anspruch 1,
**dadurch gekennzeichnet,**
**daß** das erste Reflektorelement (42) ein auf der Achse (26) angeordnetes, separates Reflektorelement ist.

3. Vorrichtung nach Anspruch 1,
**dadurch gekennzeichnet,**
**daß** das erste Reflektorelement (42) ein reflektierender Bereich der Achse (26) ist.

4. Vorrichtung nach Anspruch 1,
**dadurch gekennzeichnet,**
**daß** die Auswertungseinheit (45) die Dicke eines flachen Produkts (20, 21) auf der Basis eines der Entfernung zwischen der ersten und der zweiten Walze (24, 28) entsprechenden Wertes berechnet.

5. Vorrichtung nach Anspruch 4
**dadurch gekennzeichnet,**
**daß** der Wert einem vergrößerten Wert der Entfernung zwischen der ersten und der zweiten Walze (24, 28) entspricht.

6. Vorrichtung nach Anspruch 1,
**dadurch gekennzeichnet,**
**daß** die erste Walze (24) an eine schwenkbar auf einer Achse (34) befestigten Welle (32) gekoppelt ist.

7. Vorrichtung nach Anspruch 1,
**dadurch gekennzeichnet,**
**daß** die erste Walze (24) eine mechanische Kopplung aufweist, durch die eine von dem flachen Produkt (20, 21) hervorgerufene Auslenkung vergrößert wird.

8. Vorrichtung nach Anspruch 1,
**dadurch gekennzeichnet,**
**daß** die Aufnahmeeinrichtungen (13) eine jeweilige Lichtleit-Vorrichtung (56) zum Ausrichten des Lichts aufweisen welche das von der ortsfesten Lichtquelle (44) ausgestrahlte Licht auf das erste Reflektorelement (42) lenkt, wenn die jeweilige Aufnahmeeinrichtung (13) die Lichtquelle (44) passiert.

9. Vorrichtung nach Anspruch 8
**dadurch gekennzeichnet,**
**daß** die Lichtleit-Vorrichtung (56) zum Ausrichten des Lichts ein Lichtfaserkabel umfaßt.

10. Vorrichtung nach Anspruch 8,
**dadurch gekennzeichnet,**
**daß** die Aufnahmeeinrichtungen (13) eine jeweilige Ausricht-Vorrichtung (58) zum Ausrichten des von dem ersten Reflektorelement (42) reflektierten Lichts auf das erste Sensorelement (38) umfassen, so daß mit dem ersten Sensorelement (38) ein Auslenkungssignal erzeugt wird.

11. Vorrichtung nach Anspruch 10,
**dadurch gekennzeichnet,**
**daß** die Aufnahmeeinrichtungen (13) eine jeweilige Ablenk-Vorrichtung (60) zum Ausrichten des von der ortsfesten Lichtquelle (44) ausgestrahlten Lichts auf das erste Sensorelement (38) umfassen so daß mit dem ersten Sensorelement (38) ein Bezugssignal erzeugt wird.

12. Vorrichtung nach Anspruch 11,
**dadurch gekennzeichnet,**
**daß** die Auswertungseinheit (45) auf der Basis des Bezugssignals und des Auslenkungssignals die Dicke des flachen Produkts (20, 21) berechnet.

13. Vorrichtung nach Anspruch 1,
**gekennzeichnet durch**
ein an einer jeweiligen der Aufnahme-einrichtungen (13) angeordnetes zweites Reflektorelement (43), welches von der Lichtquelle (44) ausgestrahltes Licht reflektiert.

14. Vorrichtung nach Anspruch 13,
**gekennzeichnet durch**
ein zweites Sensorelement (68) zum Erfassen des von dem zweiten Reflektorelement (43) reflektierten Lichts, welches ein zweites Sensorsignal erzeugt.

15. Vorrichtung nach Anspruch 14,
**gekennzeichnet durch**
eine Pulserzeugungseinrichtung (62) zum Erzeugen von Impulsen.

16. Vorrichtung nach Anspruch 15,
**gekennzeichnet durch**
einen ortsfest angeordneten Mikroprozessor (64), welcher die von der Pulserzeugungseinrichtung (62) erzeugten Impulse und das erste und zweite Sensorsignal überwacht.

17. Vorrichtung nach Anspruch 16
**dadurch gekennzeichnet,**
**daß** der Mikroprozessor (64) die Dicke des flachen Produkts (20, 21) auf der Basis der Anzahl der gezählten Impulse der Pulserzeugungseinrichtung (62) innerhalb eines Zeitraums zwischen dem ersten und zweiten Sensorsignal berechnet.

18. Vorrichtung nach Anspruch 13,
**dadurch gekennzeichnet,**
**daß** die jeweilige Lichtleitvorrichtung (56) von der ortsfesten Lichtquelle (44) ausgestrahltes Licht auf das erste und zweite Reflektorelement (42, 43) ausrichtet, wenn eine jeweilige der Aufnahmeeinrichtungen (13) die Lichtquelle (44) passiert.

19. Vorrichtung nach Anspruch 13,
**dadurch gekennzeichnet ,**
**daß** jede der Aufnahmeeinrichtungen (13) eine Ausricht- Vorrichtung (58) zum Ausrichten des von den ersten und zweien Reflektorelementen (42, 43) reflektierten Lichts auf das erste Sensorelement (38;66) und das zweite Sensorelement (68) aufweist.

## Claims

1. Device for collecting flat products (20; 21) such as sheets or signatures with a multitude of moveable receiving means (13) that always comprise a supply means (22) which is formed by a cylinder pair consisting of a first and a second cylinder (24, 28) for measuring the thickness of the products (20; 21), and forming a cylinder gap through which the products (20; 21) can be guided, whereby the first cylinder (24) is bearingly positioned on a first axis (26) displaceable by the products passing through the cylinder gap, and with an evaluation unit (45; 64) comprising a locationally fixed light source (44), a first sensor element (38; 66), and processing first sensor signals created by the light emitted by the former, comprising a measuring means for the thickness of the flat products (20; 21), **characterised in that** the measuring means comprises a first reflector element (42) affixed to the first axis (26), which reflects light emitted by the light source (44) and directs the same onto the first sensor element (38; 66), and **in that** the first reflector element (42) comprises a planar reflector surface.

2. Device according to Claim 1, **characterised in that** the first reflector element (42) consists of a separate reflector element positioned on the axis (26).

3. Device according to Claim 1, **characterised in that** the first reflector element (42) consists of a reflecting area of the axis (26).

4. Device according to Claim 1, **characterised in that** the evaluation unit (45) calculated the thickness of a flat product (20, 21) on the basis of a value equalling the distance between the first and the second cylinder (24, 28).

5. Device according to Claim 4, **characterised in that** the value equals an increased value of the distance between the first and the second cylinder (24, 28).

6. Device according to Claim 1, **characterised in that** the first cylinder (24) is coupled with a shaft (32) tiltably affixed to an axis (34).

7. Device according to Claim 1, **characterised in that** the first cylinder (24) comprises a mechanical coupling by means of which a displacement caused by the flat product (20, 21) is increased.

8. Device according to Claim 1, **characterised in that** receiving means (13) each comprise a light conducting device (56) for aligning the light, which direct the light emitted by the locationally fixed light source (44) onto the first reflector element (42) when the relevant receiving means (13) passes the light source (44).

9. Device according to Claim 8, **characterised in that** the light conducting device (56) comprises an optic fibre cable for aligning the light.

10. Device according to Claim 8, **characterised in that** the receiving means (13) each comprise an alignment device (58) for directing the light reflected by the first reflector element (42) towards the first sensor element (38), so that a displacement signal is created with the first sensor element (38).

11. Device according to Claim 10, **characterised in that** the receiving means (13) each comprise a diverting device (60) for directing the light emitted by the locationally fixed light source (44) towards the first sensor element (38), so that a reference signal is created with the first sensor element (38).

12. Device according to Claim 11, **characterised in that** the evaluation unit (45) calculates the thickness of the flat product (20, 21) on the basis of the reference signal and the displacement signal.

13. Device according to Claim 1, **characterised by** a second reflector element (43) located on each of the receiving means (13) which reflects the light emitted by the light source (44).

14. Device according to Claim 13, **characterised by** a second sensor element (68) for recording the light reflected by the second reflector element (43), which creates a second sensor signal.

15. Device according to Claim 14, **characterised by** a pulse generating means (62) for generating pulses.

16. Device according to Claim 15, **characterised by** a locationally fixed microprocessor (64), which monitors the pulses generated by the pulse generating means (62) and the first and second sensor signal.

17. Device according to Claim 16, **characterised in that** the microprocessor (64) calculates the thickness of the flat product (20, 21) on the basis of the number of pulses counted by the pulse generating means (62) within a time period between the first and the second sensor signal.

18. Device according to Claim 13, **characterised in that** the relevant light conducting device (56) directs light emitted by the locationally fixed light source (44) towards the first and second reflector element (42, 43) when the relevant one of the receiving means (13) passes the light source (44).

19. Device according to Claim 13, **characterised in that** each one of the receiving means (13) comprises an alignment device (58) for directing the light reflected by the first and second reflector elements (42, 43) towards the first sensor element (38; 66) and the second sensor element (68).

## Revendications

1. Dispositif pour réunir des produits plats (20 ; 21) comme des feuilles ou des cahiers avec une pluralité de dispositifs de réception mobiles (13) comprenant chacun un dispositif d'amenée (22) qui est formé au moyen d'une paire de rouleaux utilisés pour mesurer l'épaisseur des produits (20 ; 21) d'un premier et d'un deuxième rouleaux (24, 28) et forme une fente de rouleaux à travers laquelle les produits (20 ; 21) peuvent être amenés, le premier rouleau (24) étant disposé sur un premier axe (26) pouvant être décalé par les produits passant à travers la fente de rouleaux et avec un dispositif de mesure de l'épaisseur des produits plats (20 ; 21) comprenant une source lumineuse disposée fixement (44), un premier élément de capteur (38 ; 66) et une unité d'évaluation (45 ; 64) traitant les premiers signaux produits par l'élément de capteur à partir de la lumière irradiée,
**caractérisé en ce que** le dispositif de mesure présente un premier élément de réflecteur (42) fixé sur le premier axe (26), lequel réfléchit de la lumière diffusée par la source lumineuse (44) et la dirige sur le premier élément de capteur (38 ; 66), et **en ce que** le premier élément de réflecteur (42) présente une surface de réflecteur plate.

2. Dispositif selon la revendication 1, **caractérisé en ce que** le premier élément de réflecteur (42) est un élément de réflecteur séparé placé sur l'axe (26).

3. Dispositif selon la revendication 1, **caractérisé en ce que** le premier élément de réflecteur (42) est une zone réfléchissante de l'axe (26).

4. Dispositif selon la revendication 1, **caractérisé en ce que** l'unité d'évaluation (45) calcule l'épaisseur d'un produit plat (20, 21) sur la base d'une valeur correspondant à l'éloignement entre le premier et le deuxième rouleau (24, 28).

5. Dispositif selon la revendication 4, **caractérisé en ce que** la valeur correspond à une valeur agrandie de l'éloignement entre le premier et le deuxième rouleau (24, 28).

6. Dispositif selon la revendication 1,
**caractérisé en ce que** le premier rouleau (24) est couplé sur un arbre (32) fixé de manière pivotante sur un axe (34).

7. Dispositif selon la revendication 1, **caractérisé en ce que** le premier rouleau (24) présente un couplage mécanique par lequel une déviation provoquée par le produit plat (20, 21) est agrandie.

8. Dispositif selon la revendication 1, **caractérisé en ce que** les dispositifs de réception (13) présentent un dispositif de guidage de la lumière (56) respectif pour aligner la lumière, lequel dirige la lumière rayonnée par la source lumineuse fixe (44) sur le premier élément de réflecteur (42) lorsque le dispositif de réception (13) respectif passe devant la source lumineuse (44).

9. Dispositif selon la revendication 8, **caractérisé en ce que** le dispositif de guidage de la lumière (56) pour aligner la lumière comprend un câble de fibres optiques.

10. Dispositif selon la revendication 8, **caractérisé en ce que** les dispositifs de réception (13) comprennent un dispositif d'alignement (58) respectif pour aligner la lumière réfléchie par le premier élément de réflecteur (42) sur le premier élément de capteur (38), de façon à ce qu'avec le premier élément de capteur (38), un signal de déviation soit produit.

11. Dispositif selon la revendication 10, **caractérisé en ce que** les dispositifs de réception (13) comprennent un dispositif de déflexion (60) respectif pour dévier la lumière rayonnée par la première source lumineuse (44) sur le premier élément de capteur (38), de façon à ce qu'avec le premier élément de capteur (38), un signal de référence soit produit.

12. Dispositif selon la revendication 11, **caractérisé en ce que** l'unité d'évaluation (45) calcule l'épaisseur du produit plat (20, 21) sur la base du signal de référence et du signal de déviation.

13. Dispositif selon la revendication 1, **caractérisé par** un deuxième élément de réflecteur (43) placé sur l'un respectif des dispositifs de réception (13), lequel réfléchit de la lumière rayonnée par la source lumineuse (44).

14. Dispositif selon la revendication 13, **caractérisé par** un deuxième élément de capteur (68) pour détecter la lumière réfléchie par le deuxième élément de réflecteur (43), lequel produit un deuxième signal de capteur.

15. Dispositif selon la revendication 14, **caractérisé par** un dispositif de production d'impulsions (62) pour la production d'impulsions.

16. Dispositif selon la revendication 15, **caractérisé par** un microprocesseur (64) disposé de manière fixe, lequel surveille les impulsions produites par le dispositif de production d'impulsions (62) et le premier et deuxième signal de capteur.

17. Dispositif selon la revendication 16, **caractérisé en ce que** le microprocesseur (64) calcule l'épaisseur du produit plat (20, 21) sur la base du nombre d'impulsions comptées du dispositif de production d'impulsions (62) dans un intervalle entre le premier et deuxième signal de capteur.

18. Dispositif selon la revendication 13, **caractérisé en ce que** le dispositif de guidage de la lumière (56) respectif aligne de la lumière rayonnée par la source lumineuse fixe (44) sur le premier et deuxième élément de réflecteur (42, 43) quand l'un respectif des dispositifs de réception (13) passe devant la source lumineuse (44).

19. Dispositif selon la revendication 13, **caractérisé en ce que** chacun des dispositifs de réception (13) présente un dispositif d'alignement (58) pour aligner la lumière réfléchie par les premier et deuxième éléments de réflecteurs (42, 43) sur le premier élément de capteur (38 ; 66) et le deuxième élément de capteur (68).
